# EUROPEAN PATENT SPECIFICATION

(11) **EP 0 992 913 B1**
(45) Date of publication and mention of the grant of the patent: **22.09.2004**
(21) Application number: 99917184.6
(22) Date of filing: 27.04.1999
(51) Int. Cl.: G06F 12/00, G06F 12/08

(54) **DATA RECORDING/REPRODUCING APPARATUS AND METHOD THEREFOR**
DATEN AUFNAHME/WIEDERGABGABEGERÄT UND VERFAHREN HIERFÜR
DISPOSITIF ET PROCEDE D'ENREGISTREMENT/LECTURE DE DONNEES

(30) Priority: 27.04.1998 JP 11753798
(43) Date of publication of application: 12.04.2000
(73) Proprietor: Sony Corporation, Tokyo 141-0001 (JP)
(72) Inventor: NAKAMURA, Kazue Sony Corporation, Shinagawa-ku Tokyo 141-0001 (JP)
(74) Representative: Pratt, Richard Wilson
(86) International application number: PCT/JP1999/002243
(87) International publication number: WO 1999/056211

(56) References cited:
- JP-A- 7 244 600
- JP-A- 7 306 802
- JP-A- 8 129 499
- US-A- 5 564 037

## Description

The present invention relates to a data storage and retrieval apparatus for recording, storing, and reproducing files in a computer or other data processor and to a method for the same.

Computers and other data processors often use huge volumes of data to achieve desired goals. Ordinarily, this data is classified according to application, type, etc. and the groups of classified data are managed in the form of data files. The data files are stored on hard disks, magneto optic disks (MO), magnetic tape, or other data storage media. When required by the computer or other data processor, the desired data files are read from the data storage medium and used by the applications etc.

Various types of data storage media and systems for managing these data storage media have been proposed and commercialized. For example, the data storage system using DTF (digital tape format) standard tape proposed by the assignee is one example. In this DTF tape format, the file size, position information, etc. are recorded at the header part of the tape and the last part of the data stored on the tape to enable high speed file access.

As a system to which the DTF standard is applied, there is PetaServe (name of software offered by assignee, registered trademark). PetaServe is a hierarchical storage management (HSM) software which arranges storage systems in a hierarchy according to the properties of the storage media or data storage capacities so as to enable rational management of large-scale storage systems while improving ease of use as seen from the user's standpoint. PetaServe manages storage systems automatically based on user settings in accordance with the properties of the data storage media, such as hard disks, magneto optic disks (MO), and magnetic tape, and the state of use of the data.

Petaserve for example moves files present on a computer hard disk to a more economical removable medium (DTF tape, magnetic tape, or other storage medium) to secure a large apparent storage capacity of the hard disk. Further, when a need arises for use of a file moved to the removable medium, the file moved to the removable medium is again restored to the computer hard disk. In PetaServe, files on the hard disk are copied to a removable medium and the original files on the hard disk are reduced to "a stub files" containing access data but no data content. This is called "migration". The restoration of migrated files on to the hard disk is called "reloading".

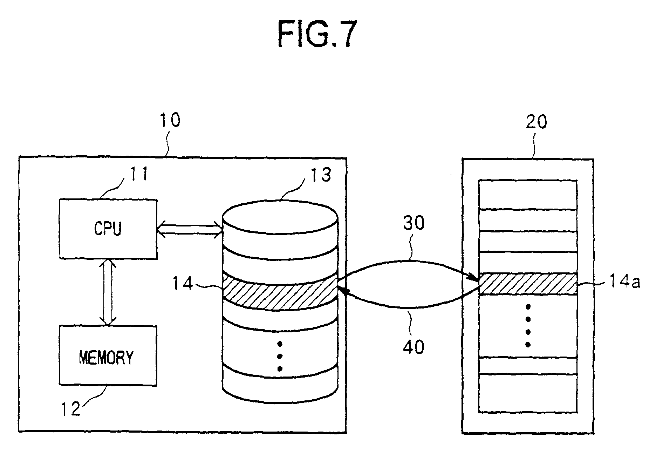

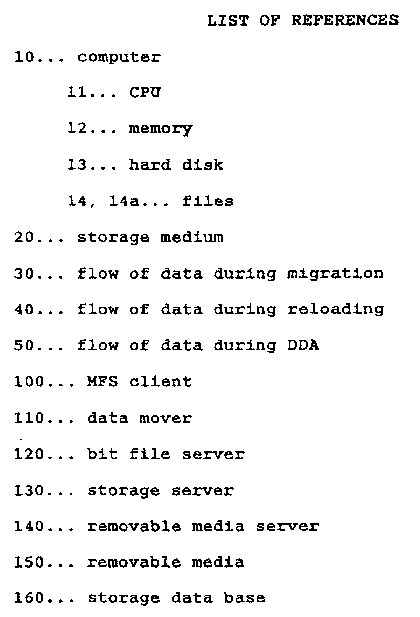

Figure 7 is a conceptual view of migration and reloading. In Fig. 7, reference numeral 10 represents a computer containing a CPU (central processing unit) 11, memory 12, and hard disk 13 and 20 represents a storage medium comprised of a removable medium. Reference numerals 30 and 40 show the flow of data at the time of migration and reloading. Due to the migration, a file 14 on the hard disk 13 is copied to the removable medium 20, just the access information relating to the migrated file is left in the original file, and the data content is discarded. Due to this, a file 14a having the same content as the file 14 stored on the hard disk 13 is stored in the storage medium 20 and the region storing the file 14 on the hard disk 13 can be opened up to other applications. When the CPU 11 etc. desires to use the content of the file 14, it performs reloading to copy the content of the file 14a from the storage medium 20 to the hard disk 13 and restore the file 5 on the hard disk 13 to its original state, so the CPU 11 etc. can access the restored file 14 by normal file access procedures.

The migration and reloading are performed automatically by PetaServe, so the user does not have to take particular note of it and through processing can be realised.

In the above reloading, however, when restoring a file 14a migrated to the removable medium 20 on to the hard disk 13of the computer, the content of the file 14a is read from the removable medium 20 and written on the hard disk 13 of the computer 10. Next, the CPU 11 reads the content of the file 14 from the hard disk 13 and stores it in an assigned region of the memory 12. Since the hard disk 13 is interposed in this reloading, the free space of the hard disk 13 is used up and the speed of access to the file 13 as seen from the CPU 11 is limited by the write and read speed of the hard disk so there is the disadvantage that the system performance is reduced.

D1 = US-A-5564037 discloses a data storage and retrieval apparatus having a file server with main memory and a first storage medium in the form of the disk storage of the file server and having further a second storage means provided outside of the file server. The file server is adapted to perform migration for transferring a file stored in the first storage medium to said second storage medium and to generate an information file including access information for the file in the first storage medium. The storage and retrieval apparatus further comprises: an information acquisition means for reading said access information from the information file stored in the first storage medium when the data processor accesses a migrated file; a file opening means for opening the transferred file in the second storage medium based on access information acquired from the information acquisition means; and a reading means for reading the data stored from the opened file and storing it in a predetermined region in the first storage medium of the file server. Thus the migrated file is retrieved from the second storage means and restored to its original form in the first storage medium.

Therefore, the present invention was made in consideration of the above problem of the system of the related art and has as its object the provision of a data storage and retrieval apparatus, and a method for the same, which directly writes data read out from a file stored in a removable medium or other storage medium in a region assigned in a memory of a computer or the like without going through a hard disk when there is a request for access to a migrated file (in an embodiment of the present invention, this being referred to as DDA (direct device access)) and thereby enables the realisation of high speed file access without using up the space on the hard disk and without being dependent on the access speed of the hard disk.

A data storage and retrieval apparatus of the present invention is one having a data processor, including a memory, central processing unit, and first storage medium, which performs migration which transfers a file stored in the first storage medium to a second storage medium provided outside of the data processor and then generates an information file including access information of the transferred file in the first storage medium, comprising an information acquisition means for reading said access information from the information file stored in the first storage medium when the transferred file is accessed by an application program, a file opening means for opening means for opening the transferred file in the second storage medium based on the access information acquired from the data acquisition means, and means for reading the data from the opened file and loading the same in an area of the said memory assigned by the application program.

Preferably the data processing is a computer, the first storage medium is a hard disk and the second storage medium is a removable medium.

Preferably the data processor determines a priority of migration based on a predetermined standard for a plurality of files stored on the first storage medium and performs the migration from the file with the highest priority; a file stored on the first storage medium has an information region for storing file management information and a data region for storing data; all of the data of the data region is transferred to the second storage medium by the migration; and an information file is generated on the first storage medium.

Preferably, the information file contains the file management information, access information to the file transferred to the second storage medium, and size information of the file on the first storage medium before the migration, and the data region of the file on the first storage medium is opened up after the information file is generated.

A data storage and retrieval method of the present invention is a data storage and retrieval method wherein a data processor, including a memory, central processing unit, and first storage medium, performs file migration which transfers a file stored in the first storage medium to a second storage medium provided outside of the data processor, then generates an information file including access information to the first storage medium, the method comprising reading said access information from the information file stored in the first storage medium when the transferred file is accessed by an application program opening the transferred file in the second storage medium based on the read access information, reading the data from the opened file, and loading the same in an area of the said memory assigned by the application program.

A better understanding of the present invention will become apparent from the following illustrative description given with reference to the attached drawings, in which:
Fig. 1 is a block diagram of an embodiment of a data storage and retrieval apparatus of the present invention and shows the configuration of the data storage and retrieval apparatus and the flow of the data at the time of migration and DDA;
Fig. 2A is a view of the configuration of an ordinary file in the present embodiment;
Fig. 2B is a view of the configuration of a bit file in the present embodiment;
Fig. 2C is a view of the configuration of a stub file in the present embodiment;
Fig. 3 is a view of the flow of the migration and DDA;
Fig. 4 is a flow chart of the processing routine for opening a file in the DDA;
Fig. 5 is a flow chart of the processing routine for reading data in the DDA;
Fig. 6 is a flow chart of the processing routine for closing a file in the DDA; and
Fig. 7 is a view of the configuration of a data storage and retrieval apparatus and flow of data at the time of migration and reloading of the related art.

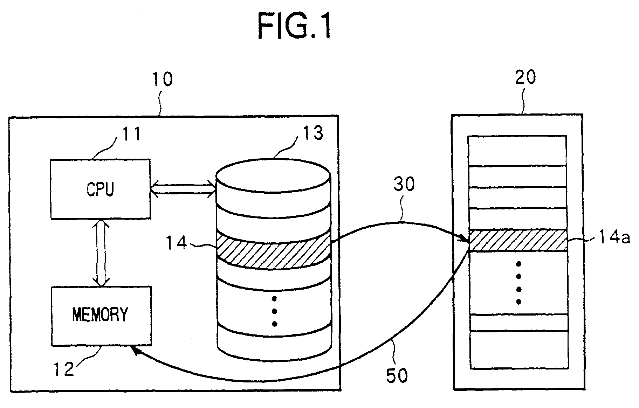

An embodiment of the data storage and retrieval apparatus of the present invention will be explained next with reference to the block diagram of Fig. 1. The data storage and retrieval apparatus of this embodiment is provided with a data processor including a CPU 11, memory 12, and hard disk 13, for example, a computer 10, and a data storage medium 20 provided outside the computer 10. The data storage medium 20 is for example comprised by a DTF tape, magnetic tape, or other removable medium.

In the data storage and retrieval apparatus of the present embodiment, the CPU 11 operates based on a control program and controls the memory 12, hard disk 13, and other peripherals. The data storage and retrieval apparatus automatically manages the files on the hard disk 13, based on parameters set by the user, according to the properties of the storage media and the state of use of the data, for example, the frequency of use, the time elapsed until use from storage, the transfer and search speed, etc. so as to realize the maximum storage and operational efficiency. For example, it determines the priority of migration based on predetermined conditions such as the frequency of use in the plurality of files stored on the hard disk 13. Further, it performs migration from the file with the highest priority, for example, the file with the lowest frequency of use. Here, as shown in Fig. 1, it designates the file 14 on the hard disk 13 as the file for migration and performs migration for transferring the file 14 from the hard disk 13 to the external storage medium 20.

The migration in the data storage and retrieval apparatus of the present embodiment is the same as the migration in the above-mentioned PetaServe. First, the content of the file 14 covered by the migration is copied to the external storage medium 20. Due to this, a file 14a of the same content as the file 14 is produced in the external storage medium 20. Further, a stub file storing the access information of the file 14 etc. is produced in the hard disk 13. The stub file stores the access information of the file 14, for example, the bit file ID, file size, etc. and does not hold actual content, so the size becomes far smaller than that of the original file 14. Therefore, the region of storage of the original file 14 in the hard disk 13 is opened up to other applications and the usable size of the hard disk 13 is expanded.

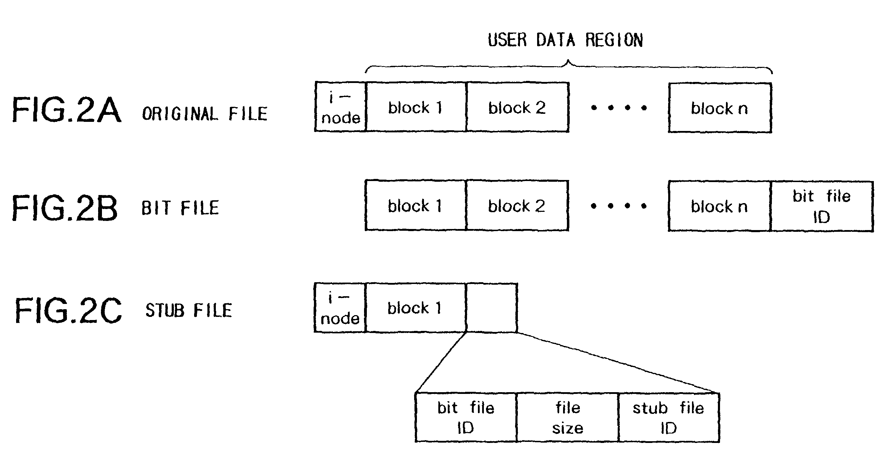

Figures 2A to 2C show the concepts of the original file, bit file, and stub file stored on the hard disk 13.

As shown in Fig. 2A, a file stored on the hard disk is comprised of a header region comprised of an i-node and a user data region storing the user data. The i-node is formed in byte units, is managed by a file management system, and holds the information required for a file. In the user data region, the user data is stored divided into block units (for example, 512 byte units).

As shown in Fig. 2B, a bit file is comprised of the user data region of the migrated original file and a bit file ID. Note that the bit file ID is an unambiguous ID in the system prepared at the time of migration. The bit file is linked with the stub file by this bit file ID.

As shown in Fig. 2C, a stub file is comprised of the i-node, the first block of the user data region, the bit file ID, the logical size of the file before migration (in both byte and block units), and the stub file ID. The size of the stub file is fixed and is for example set to 1023 bytes.

Due to the migration, a bit file is formed in the external storage medium and only the stub file remains at the hard disk. The user can search through and restore migrated files for access through the stub files remaining on the hard disk. That is, even when a file is migrated, it appears to the user that the original file remains on the hard disk.

The data storage and retrieval apparatus of the present embodiment controls the migration and DDA of the files by an MFS (migrating file system). Note that the MFS spoken of here is comprised of a processor and a control program loaded in the processor. Further, a client in which the function of the MFS is installed is called an MFS client.

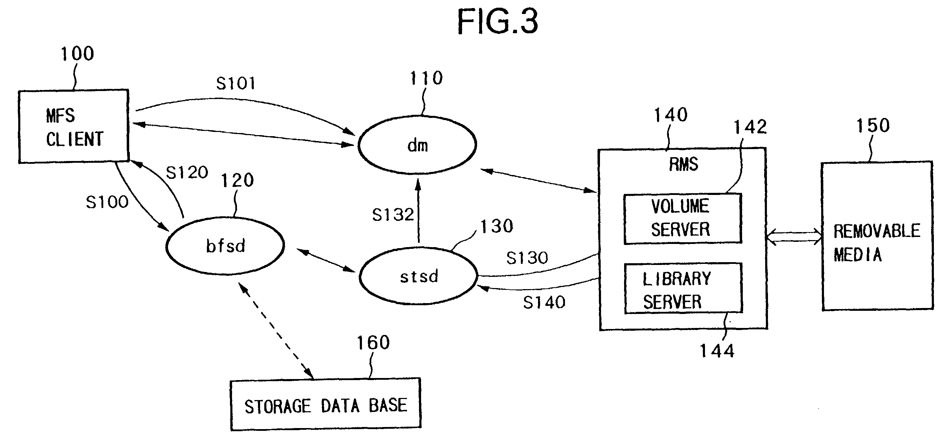

Figure 3 is a view of the migration and DDA operation. In Fig. 3, 100 is an MFS client, 110 a data mover (dm), 120 a bit file server (bfsd), 130 a storage server (stsd), 140 a removable media server (RMS), 150 a removable media, and 160 a storage data base. As shown, the removable media server 140 includes a volume server 142 and a library server 144.

The MFS client 100 issues a migration or DDA request and outputs it to the data mover 110 and the bit file server 120. Further, the MFS client 100 provides a TCP stream socket port (data input-output interface) number used for movement of data to the data mover 110 and the bit file server 120.

The bit file server 120 receives the request for migration and DDA from the MFS client 100 and assigns a bit file ID to it. Further, it selects a storage server 130 and a volume server 142 in the removable media server 140. The bit file server 120 manages the arrangement and information (migration path etc.) of all of the bit files stored in the removable media 150 through the storage data base and outputs the necessary instructions to the storage server 130.

The storage server 130 determines how to store the designated bit file. It determines a suitable volume set for the processing for storage of the bit file requested. Here, the "volume" is one unit of a physical storage unit. For example, in the case of a tape unit, it is one tape. In the case of a unit not allowing simultaneous access of all surfaces (for example, an optical disk unit), it is one surface. "Volume set" means a set of the same type of media. The storage server 130 outputs a request for mounting of a volume or mounting of a disk to the removable storage server 140 or starts up the data mover 110.

The data mover 110 uses the STC stream socket port provided by the MFS client 100 to execute the actual data move from the MFS client 100 to the removable media 150 (or the reverse). When the volume for which movement of data was requested is mounted, the storage server 130 receives the mount information from the removable media server 140 and the data mover 110 is started up.

The removable media server 140 manages all of the volumes in the removable media 150 and makes requests for mounting or unmounting suitable volumes. Further, the removable media server 140 assigns and opens up volumes to the client and reserves and frees volumes to the client.

The storage data base 160 is a data base (file) managed by the bit file server 120. The information of all of the bit files in the storage is stored in the storage data base 160. The bit file information is updated with every migration or DDA.

Below, an explanation will be made of the flow of migration and DDA in the present embodiment with reference to Fig. 3.

At the time of migration, an instruction signal S100 for performing the migration on a predetermined file on the hard disk is output from the MFS client 100 to the bit file server 120. Further, a TCP stream socket port number S101 used for data movement is output from the MFS client 100 to the data mover 110.

The volume server 142 and storage server 130 are selected by the bit file server 120. Further, the volume server and volume to be used are determined based on the information provided from the MFS client 100, in particular the migration path assigned to the stored file, the size of the file, and other information. The storage data base 160 is updated by the bit file server 120. Here, when the bit file server 120 is called up by the storage server 130, it assigns a bit file ID to the new bit file which is added to a bit file table in the storage data base 160. Further, the state of use of the selected volume is stored in the storage data base 160. A signal S120 showing the ID of the bit file migrated is returned by the bit file server 120 to the MFS client 100.

Next, a mount request S130 for mounting the selected volume is output from the storage server 130 to the volume server 142 in the removable media server 140. Therefore, the storage server 130 is connected to the volume server 142.

When the selected volume has already been mounted, a signal S140 showing that state is output from the volume server 142 to the storage server 130. The storage server 130 outputs a startup signal S132 to the data mover 110 when it receives information that the selected volume has been mounted from the volume server 142. Further, information such as the socket number of the client, the bit file ID, and the mount point is supplied by the storage server 130 to the data mover 110.

The data mover 110 produces a file in the selected volume, connects to the MFS client 100, and moves the data. The MFS client 100 reads out the data from the file on the hard disk and writes it to the socket port. The data mover 110 reads out the data from the socket port and writes its in the file produced in the volume.

Due to the operation explained above, the file on the hard disk of the MFS client 100 is migrated and a bit file is formed in the selected volume. A stub file is stored on the hard disk of the MFS client 100 and the data region of the original file is opened up.

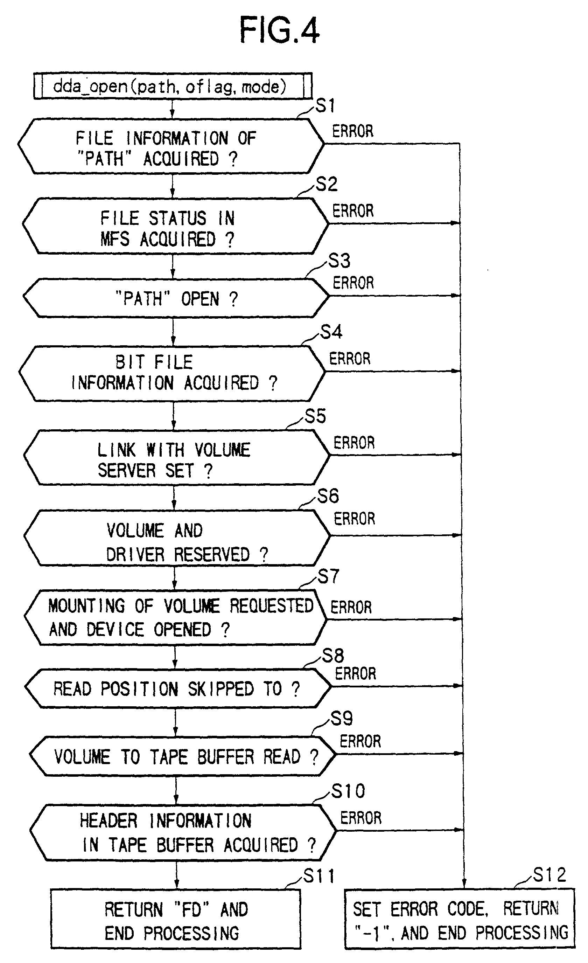

The DDA is the reverse to the migration. In the DDA of the present embodiment, the content of a designated bit file is directly stored in a memory region assigned for the application in the client without going through the hard disk of the MFS client 100. Figures 4 to 6 are flow charts of the flow of the file open, data read, and file close routines at the time of DDA. This DDA will be explained in detail below with reference to these flow charts.

The DDA is executed when a request for access to a stub file is issued by an application. For example, when reading the data portion of a file of more than 512 byte size, DDA is executed when there is a write operation in the file or when there is a change in the size of the file. In this case, a predetermined region of the memory 12 is assigned by the application requesting the access to the stub file and the data read from the accessed file is stored in that assigned region.

Figure 4 is a flow chart of the file open routine. In the MFS client 100, a file open routine starts along with a file open command "dda_open(path, oflag, mode)" from an application etc. Due to this processing, in accordance with a file open command, the bit file descriptor of the file having the path name designated by "path" is opened in accordance with the open flag "oflag". Note that, in Fig. 4, "mode" depicts the mode of the file to be opened.

First, as shown in step S1, the file information of "path" is obtained. When the file is a file which does not exist in the designated migrating file system, an error code is set, the value of "-1" is returned, then the processing is ended (step S12).

Next, as shown in step S2, when the existence of the file designated by "path" is confirmed in the designated migrating file system of the host computer 10, the status of the file in the migrating file system is acquired, then whether the file is a stub file or a shadowed file is confirmed. When the status the file on the MFS cannot be acquired, an error code is set, the value of "-1" is returned, then the processing is ended. Note that here, a "shadowed file" is a file which exists as both a file on the hard disk in the MFS client and a file of the same content migrated to a predetermined volume.

Then, as shown in step S3, the file designated by "path" is opened. Here, when the designated file cannot be opened, the error code is set, the value of "-1" is returned, then the processing is ended.

Next, as shown in step S4, the bit file information is acquired and whether the media family is a magnetic tape of the DTF format is confirmed. When the media family is not a DTF format magnetic tape, an error code is set, the value of "-1" is returned, then the processing is ended.

Next, as shown in step S5, a link with the volume server is established and the descriptor of the file connected to the link is returned. Here, when the volume server cannot be linked with, an error code is set, the value of "-1" is returned, then the processing is ended.

At step S6, a specific volume and empty drive are reserved from the volume server linked with the file descriptor returned in the previous step S5. When failing to reserve an empty driver, an error code is set, the value of "-1" is returned, then the processing is ended.

Next, at step S7, the reserved volume, here, the DTF format magnetic tape, is mounted in the reserved driver. When failing to mount, an error code is set, the value of "-1" is returned, then the processing is ended.

After successful mounting of the tape at step S7, as shown in step S8, the volume mounted to the driver is located up to a read position corresponding to the bit file descriptor. Note that, here, when the location to the read position fails, an error code is set, the value of "-1" is returned, then the processing is ended.

Then, as shown in step S9, exactly the prescribed tape buffer size worth of data is read from the read position corresponding to the bit file descriptor to a tape buffer. When failing in the read operation, in the same way as the steps described above, an error code is set, the value of "-1" is returned, then the processing is ended. The tape buffer is provided for example by the removable media server. The data is read from the tape through the tape buffer. At step S10, header information located at the head of the tape buffer is acquired. Here, when the header information cannot be acquired, an error code is set, the value of "-1" is returned, then the processing is ended.

Finally, when the above series of processing is completely finished normally, as shown in step S11, the file descriptor (fd) opening the file designated by "path" is returned and the processing is ended.

The file descriptor of the file designated by "path" is determined by the processing from step S1 to S11. After that, the data is read from the designated file corresponding to the file descriptor.

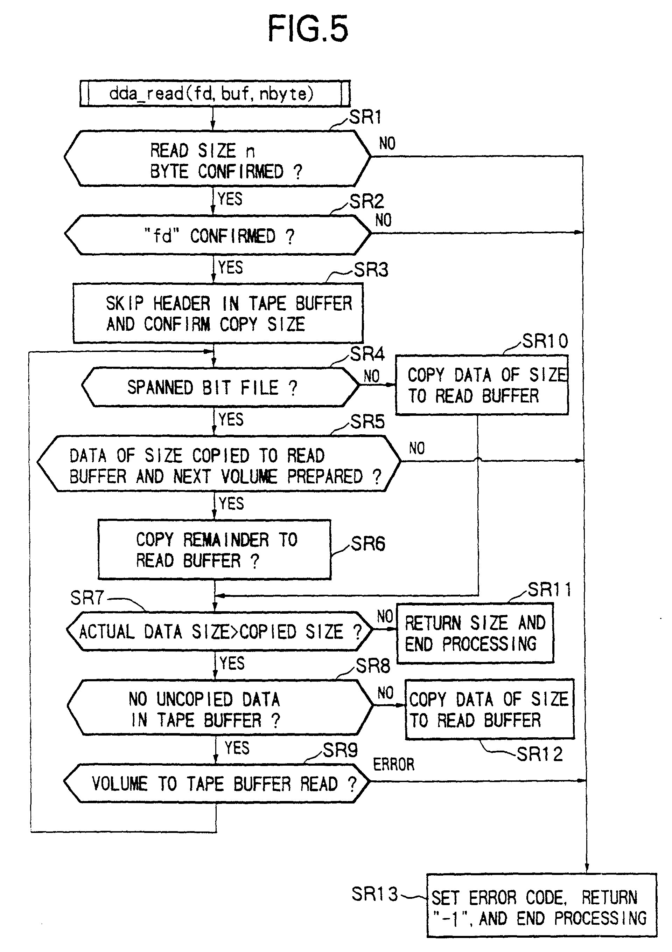

Figure 5 is a flow chart of the operating routine when reading data from a designated file. The file is read by reading n number of bytes worth of data from the bit file corresponding to the bit file descriptor "fd" obtained by the above file open routine to the buffer designated by "buf" (here, this is given as a user buffer). Note that, here, the n number of bytes is made a maximum 1 megabyte. When n is 0, "0" is returned and no result is given.

Below, an explanation will be made of the file read operation by referring to Fig. 5.

First, as shown in step SR1, whether the designated size n bytes of the read operation is below 1 megabyte or not is confirmed. When the result is that the n bytes of the designated size is greater than 1 megabyte, an error code is set, the value of "-1" is returned, then the processing is ended.

Next, at step SR2, whether the designated bit file descriptor "fd" is a bit file descriptor obtained by the above file open operation is confirmed. When the bit file descriptor "fd" is not the bit file descriptor obtained by the file open operation, an error code is set, the value of "-1" is returned, then the processing is ended.

Then, as shown in step SR3, the header part at the head of the tape buffer read in the above file open operation is skipped and the pointer is moved to the head of the actual data. Further, the size of the data to be copied to the user buffer is confirmed. Here, the size of the memory copy is n bytes when the actual data read to the tape buffer is larger than n bytes, while the size of the actual data is set when it is smaller than n bytes. Next, the routine proceeds to the next step SR4.

At step SR4, whether the bit file corresponding to the bit file descriptor "fd" is a spanned bit file is confirmed. When the bit file is not spanned, the routine proceeds to step SR10, where exactly the data of the size set at step SR3 is copied to the user buffer, then the routine proceeds to step SR7. Note that here, a "spanned bit file" means a bit file stored divided between two volumes.

When it is confirmed at step SR4 that the bit file corresponding to the bit file descriptor "fd" is spanned, the routine proceeds to step SR5, where data of exactly the size set at step SR3 is copied to the user buffer, then, when necessary, the next volume is prepared and data read to the tape buffer. Here, when failing in the processing, an error code is set, the value of "-1" is returned, then the processing is ended.

When the processing of step SR5 is carried out normally, the routine proceeds to step SR6, where when there is any remaining area uncopied in the user buffer, data of exactly that amount of bytes is copied from the tape buffer to the user buffer.

As shown in Fig. 5, after either of the processing of step SR6 or step SR10 is carried out, the processing of step SR7 is carried out. At step SR7, when the size of the actual data except the header of the bit file is smaller than the total size of the data copied to the user buffer, that size is returned, then the processing is ended (step SR11). When the size of the actual data is greater than the total size of the data copied to the user buffer, the routine proceeds to step SR8.

At step SR8, whether there is any data to be copied remaining in the tape buffer is confirmed. When there is data uncopied in the tape buffer, that is, there is actual data remaining in the tape buffer, data of exactly that size is copied to the user buffer. When is no uncopied data in the tape buffer, the routine goes to step SR9.

At step SR9, the data is read from the volume to the tape buffer. When failing in this processing, an error code is set, the value of "-1" is returned, then the processing is ended. When succeeding in reading to the tape buffer, the routine returns to step SR4 and the processing is repeated.

When all of the series of processing succeeds, a non-negative integer indicating the number of bytes of the actually read data is returned. The number of bytes becomes smaller when the number of bytes remaining in the bit file is smaller than "n" and becomes "0" at the end of the file. That is, when "0" is returned as a result of the data read operation, the fact that all of the actual data in the file has been read is shown. Along with this, the data read operation of the magnetic storage and retrieval apparatus ends.

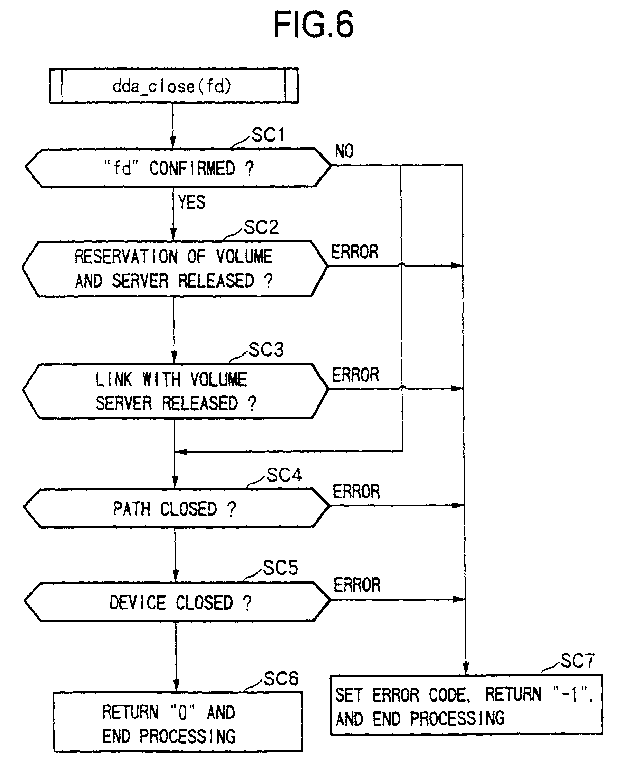

After the end of the data read operation, the file is closed. Figure 6 shows the file close routine. Below, an explanation will be given referring to Fig. 6.

When closing the file, the bit file corresponding to the bit file descriptor designated by "fd" is closed. Note that here "fd" is a bit file descriptor obtained by the above file open operation.

First, as shown in step SC1, whether the designated bit file descriptor "fd" is a bit file descriptor obtained by the above file open operation is confirmed. When the bit file descriptor "fd" is not the bit file descriptor obtained by the file open operation, an error code is set, the value of "-1" is returned, then the processing is ended. Further, the processing of steps SC2 and SC3 is skipped and the processing of step SC4 is executed.

On the other hand, when the bit file descriptor "fd" is the bit file descriptor obtained by the file open operation, the routine proceeds to the next step SC2.

At step SC2, the specific volume and empty driver reserved at the file open operation are released. According to this, the reserved volume and the driver are opened up and become available for other processing. Here, when failing in the release of the reserved volume and empty driver, an error code is set, the value of "-1" is returned, then the processing is ended.

After the processing of step SC2 is carried out normally, the routine proceeds to step SC3. At step SC3, the volume server linked in the file opening is released. Here, when failing in the release, an error code is set, the value of "-1" is returned, then the processing is ended.

When succeeding in the release of the linked volume, the routine proceeds to step SC4, where the s "path" designated in file open operation is closed. When failing in closing the "path", an error code is set, the value of "-1" is returned, then the processing is ended.

When the closing of the "path" at step SC4 is carried out normally, at the next step SC5, the device (reserved driver) is closed. Here, in the same way as the steps described above, when failing in the closing, an error code is set, the value of "-1" is returned, then the processing is ended.

When the above series of processing is normally ended, "0" is returned and the processing ended (step SC6), while when not normally ended, "-1" is returned, so whether the file closing has ended normally or not can be judged by the value returned at the file closing by the application.

As explained above, according to the data storage and retrieval apparatus and method of the present invention, when performing processing for DDA of a migrated file, the content of a bit file stored on a storage medium, for example, a magnetic tape, is read out, then directly written into a memory assigned to an application without going through a hard disk. Therefore, it is possible to avoid using up the space of the hard disk and realize high speed file access without depending on the write speed of the hard disk.

The data storage and retrieval apparatus and method of the present invention can be applied to a computer, a computer network comprised of a plurality of computers, or particularly a large-size data processing system handling a large amount of data.

## Claims

1. A data storage and retrieval apparatus having a data processor (10) including a memory (12), central processing unit (11), and first storage medium (13), which performs file migration which transfers a file (14) stored in the first storage medium (13) to a second storage medium (20) provided outside of the data processor and then generates an information file including access information of the transferred file in the first storage medium (13) comprising:
an information acquisition means (S1, S2) for reading said access information from the information file stored in the first storage medium when the transferred file is accessed by an application program,
a file opening means (S3 to S11) for opening the transferred file in the second storage medium based on the access information acquired by the information acquisition means, and
means (SR1-SR12) for reading the data from the opened file and loading the same in an area of the said memory (12) assigned by the application program.

2. A data storage and retrieval apparatus as set forth in claim 1, wherein the data processor (10) is a computer.

3. A data storage and retrieval apparatus as set forth in claim 1 or 2, wherein the first storage medium (13) is a hard disk.

4. A data storage and retrieval apparatus as set forth in claim 1, 2 or 3, wherein the second storage medium (20) is a removable medium.

5. A data storage and retrieval apparatus as set forth in claim 1, 2, 3 or 4, wherein the data processor (10) determines a priority of migration based on a predetermined standard for a plurality of files stored on the first storage medium and performs the migration from the file with the highest priority.

6. A data storage and retrieval apparatus as set forth in claim 1, 2, 3, 4 or 5,wherein a file stored on the first storage medium (13) has an information region for storing file management information and data region for storing data; all of the data of the data region is transferred to the second storage medium (20) by the migration; and an information file is generated in the first storage medium (13).

7. A data storage and retrieval apparatus as set forth in claim 6, wherein a file including the transferred file and the access information to the data is formed in the second storage medium (20) by the migration.

8. A data storage and retrieval apparatus as set forth in claim 1, 2, 3, 4, 5, 6 or 7, wherein the information file contains the file management information, access information to the file transferred to the second storage medium, and size information of the file on the first storage medium (13) before the migration.

9. A data storage and retrieval apparatus as set forth in any preceding claim, wherein the data region of the file on the first storage medium is opened up after the information file is generated.

10. A data storage and retrieval apparatus as set forth in any preceding claim, wherein the file opening means (S1-S11) generates a file descriptor (S10, S11) specifying a file transferred to the second storage medium (20) based on the access information.

11. A data storage and retrieval apparatus as set forth in claim 10, wherein the reading means (SR1-SR12) reads the content of a file opened by the opening means based on the file descriptor and stores it in a predetermined region of the said memory (12) of the data processor (10).

12. A data storage and retrieval apparatus as set forth in claim 11, further comprising a file closing means (SC1-SC6) for closing a file opened by the opening means based on the file descriptor after the data finishes being read.

13. A data storage and retrieval method wherein a data processor (10), including a memory (12), central processing unit (11), and a first storage medium (13), performs file migration which transfers a file (14) stored in the first storage medium (13) to a second storage medium (20) provided outside of the data processor, then generates an information file including access information of the transferred file in the first storage medium, the method comprising steps of:
reading (S1, S2) said access information from the information file stored in the first storage medium when the transferred file is accessed by an application program,
opening (S3 to S11) the transferred file in the second storage medium based on the read access information, and
reading (SR1-SR12) the data from the opened file and loading the same in an area of the said memory (12) assigned by the application program.

14. A data storage and retrieval method as set forth in claim 13, wherein the data processor (10) determines a priority of migration based on a predetermined standard for a plurality of files stored on the first storage medium and performs the migration from the file with the highest priority.

15. A data storage and retrieval method as set forth in claim 13 or 14 wherein a file stored in the first storage medium (13) has an information region for storing file management information and a data region for storing data and the migration comprises transferring the data of the data region to the second storage medium (20) and generating an information file in the first storage medium.

16. A data storage and retrieval method as set forth in claim 15, further comprising a step of opening up the data region of the file on the first storage medium (13) after generating the information file.

17. A data storage and retrieval method as set forth in claim 13, 14, 15 or 16, wherein the migration forms a file containing the transferred data and access information to the data in the second storage medium (20).

## Patentansprüche

1. Daten-Speicherungs- und -Wiedergewinnungsgerät mit einem einen Speicher (12), eine Zentraleinheit (11) und ein erstes Speichermedium (13) aufweisenden Datenprozessor (10), der eine Datei-Migration ausführt, die eine im ersten Speichermedium (13) gespeicherte Datei (14) zu einem außerhalb des Datenprozessors vorgesehenen zweiten Speichermedium (20) transferiert und dann eine Informationsdatei, die eine Zugriffsinformation der transferierten Datei im ersten Speichermedium (13) enthält, erzeugt, aufweisend:
eine Informations-Akquisitionseinrichtung (S1, S2) zum Lesen der Zugriffsinformation von der im ersten Speichermedium gespeicherten Informationsdatei, wenn auf die transferierte Datei von einem Anwendungsprogramm zugegriffen wird,
eine Datei-Öffnungseinrichtung (S3 bis S11) zum Öffnen der transferierten Datei im zweiten Speichermedium auf der Basis der von der Informations-Akquisitionseinrichtung akquirierten Zugriffsinformation, und
eine Einrichtung (SR1 - SR12) zum Lesen der Daten von der geöffneten Datei und Laden derselben in einen vom Anwendungsprogramm zugewiesenen Bereich des Speichers (12).

2. Daten-Speicherungs- und -Wiedergewinnungsgerät nach Anspruch 1, wobei der Datenprozessor (10) ein Computer ist.

3. Daten-Speicherungs- und -Wiedergewinnungsgerät nach Anspruch 1 oder 2, wobei das erste Speichermedium (13) eine Festplatte ist.

4. Daten-Speicherungs- und -Wiedergewinnungsgerät nach Anspruch 1, 2 oder 3, wobei das zweite Speichermedium (20) ein entfernbares Medium ist.

5. Daten-Speicherungs- und -Wiedergewinnungsgerät nach Anspruch 1, 2, 3 oder 4, wobei der Datenprozessor (10) eine Migrations-Priorität auf der Basis eines vorbestimmten Standards für auf dem ersten Speichermedium gespeicherte mehrere Dateien bestimmt und die Migration ab der Datei mit der höchsten Priorität ausführt.

6. Daten-Speicherungs- und -Wiedergewinnungsgerät nach Anspruch 1, 2, 3, 4 oder 5, wobei eine auf dem ersten Speichermedium (13) gespeicherte Datei ein Informationsgebiet zum Speichern von Datei-Managementinformation und ein Datengebiet zum Speichern von Daten aufweist, wobei alle Daten des Datengebiets durch die Migration zum zweiten Speichermedium (20) transferiert werden und eine Informationsdatei im ersten Speichermedium (13) erzeugt wird.

7. Daten-Speicherungs- und -Wiedergewinnungsgerät nach Anspruch 6, wobei eine die transferierte Datei und die Zugriffsinformation zur Datei enthaltende Datei durch die Migration im zweiten Speichermedium (20) gebildet wird.

8. Daten-Speicherungs- und -Wiedergewinnungsgerät nach Anspruch 1, 2, 3, 4, 5, 6 oder 7, wobei die Informationsdatei die Datei-Managementinformation, eine Zugriffsinformation zu der zum zweiten Speichermedium transferierten Datei und eine Größeninformation der Datei auf dem ersten Speichermedium (13) vor der Migration enthält.

9. Daten-Speicherungs- und -Wiedergewinnungsgerät nach einem der vorhergehenden Ansprüche, wobei das Datengebiet der Datei auf dem ersten Speichermedium geöffnet wird, nachdem die Informationsdatei erzeugt ist.

10. Daten-Speicherungs- und -Wiedergewinnungsgerät nach einem der vorhergehenden Ansprüche, wobei die Datei-Öffnungseinrichtung (S1 - S11) einen Datei-Deskriptor (S10, S11), der eine zum zweiten Speichermedium (20) auf der Basis der Zugriffsinformation transferierte Datei spezifiziert, erzeugt.

11. Daten-Speicherungs- und -Wiedergewinnungsgerät nach Anspruch 10, wobei die Leseeinrichtung (SR1 - SR12) den Inhalt einer von der Öffnungseinrichtung auf der Basis des Datei-Deskriptors geöffneten Datei liest und ihn in einem vorbestimmten Gebiet des Speichers (12) des Dateiprozessors (10) speichert.

12. Daten-Speicherungs- und -Wiedergewinnungsgerät nach Anspruch 11, außerdem aufweisend eine Datei-Schließungseinrichtung (SC1 - SC6) zur Schließung einer von der Öffnungseinrichtung auf der Basis des Datei-Deskriptors geöffneten Datei, nachdem die Daten aufhören, gelesen zu werden.

13. Daten-Speicherungs- und -Wiedergabeverfahren, wobei ein Datenprozessor (10), der einen Speicher (12), eine Zentraleinheit (11) und ein erstes Speichermedium (13) aufweist, eine Datei-Migration, die eine in einem ersten Speichermedium (13) gespeicherte Datei zu einem außerhalb des Datenprozessors vorgesehenen zweiten Speichermedium (20) transferiert, ausführt, dann eine Informationsdatei, die eine Zugriffsinformation der transferierten Datei im ersten Speichermedium enthält, erzeugt, wobei das Verfahren die Schritte aufweist:
Lesen (S1, S2) der Zugriffsinformation von der im ersten Speichermedium gespeicherten Informationsdatei, wenn auf die transferierte Datei von einem Anwendungsprogramm zugegriffen wird,
Öffnen (S3 bis S11) der transferierten Datei im zweiten Speichermedium auf der Basis der gelesenen Zugriffsinformation, und
Lesen (SR1 - SR12) der Daten von der geöffneten Datei und Laden derselben in einen vom Anwendungsprogramm zugewiesenen Bereich des Speichers (12).

14. Daten-Speicherungs- und -Wiedergewinnungsverfahren nach Anspruch 13, wobei der Datenprozessor (10) eine Migrations-Priorität auf der Basis eines vorbestimmten Standards für auf dem ersten Speichermedium gespeicherte mehrere Dateien vorbestimmt und die Migration ab der Datei mit der höchsten Priorität ausführt.

15. Daten-Speicherungs- und -Wiedergewinnungsverfahren nach Anspruch 13 oder 14, wobei eine im ersten Speichermedium (13) gespeicherte Datei ein Informationsgebiet zum Speichern von Datei-Managementinformation und ein Datengebiet zum Speichern von Daten aufweist, und die Migration ein Transferieren der Daten des Datengebiets zum zweiten Speichermedium (20) und Erzeugen einer Informationsdatei im ersten Speichermedium aüfweist.

16. Daten-Speicherungs- und -Wiedergewinnungsverfahren nach Anspruch 15, außerdem aufweisend einen Schritt eines Aufmachens des Datengebiets der Datei auf dem ersten Speichermedium (13) nach Erzeugung der Informationsdatei.

17. Daten-Speicherungs- und -Wiedergewinnungsverfahren nach Anspruch 13, 14, 15 oder 16, wobei die Migration eine die transferierten Daten und Zugriffsinformation zu den Daten im zweiten Speichermedium (20) enthaltende Datei bildet.

## Revendications

1. Dispositif de mémorisation et de récupération comportant un processeur de données (10) incluant une mémoire (12), une unité centrale de traitement (11), et un premier moyen de mémoire (13), qui exécute une migration de fichier, qui transfère un fichier (14) mémorisé dans le premier milieu de mémoire (13) à un second milieu de mémoire (20) prévu à l'extérieur du processeur de données, puis produit un fichier d'informations incluant des informations d'accès du fichier transféré dans le premier milieu de mémoire (13), comprenant :
des moyens (S1, S2) d'acquisition d'informations pour lire lesdites informations d'accès à partir du fichier d'informations mémorisé dans le premier milieu de mémoire lorsqu'un accès au fichier transféré est réalisé par un programme d'application,
des moyens (S3 à S11) d'ouverture de fichier pour ouvrir le fichier transféré dans le second milieu de mémoire sur la base d'une information d'accès acquise par les moyens d'acquisition d'informations, et
des moyens (SR1-SR12) pour lire les données provenant du fichier ouvert et les charger dans une zone de ladite mémoire (12) affectée par le programme d'application.

2. Dispositif de mémorisation et de récupération de données selon la revendication 1, dans lequel le processeur de données (10) est un ordinateur.

3. Dispositif de mémorisation et de récupération de données selon la revendication 1 ou 2, dans lequel le premier moyen de mémoire (13) est un disque dur.

4. Dispositif de mémorisation et de récupération de données selon la revendication 1, 2 ou 3, dans lequel le second milieu de mémoire (20) est un milieu amovible.

5. Dispositif de mémorisation et de récupération de données selon la revendication 1, 2, 3 ou 4, dans lequel le processeur de données (10) détermine une priorité de migration sur la base d'une norme prédéterminée pour une pluralité de fichiers mémorisés dans le premier milieu de mémoire et exécute la migration à partir du fichier possédant la priorité la plus élevée.

6. Dispositif de mémorisation et de récupération de données selon la revendication 1, 2, 3, 4 ou 5, dans lequel un fichier mémorisé dans le premier milieu de mémoire (13) possède une zone d'informations pour mémoriser des informations de gestion de fichiers et une zone de données pour mémoriser des données; toutes les données de la zone de données sont transférées au second milieu de mémoire (20) par la migration; et un fichier d'informations est produit dans le premier milieu de mémoire (13).

7. Dispositif de mémorisation et de récupération de données selon la revendication 6, dans lequel un fichier incluant le fichier transféré et l'information d'accès aux données est formé dans le second milieu de mémoire (20) par la migration.

8. Dispositif de mémorisation et de récupération de données selon la revendication 1, 2, 3, 4, 5, 6 ou 7, dans lequel le fichier d'informations contient les informations de gestion de fichiers, des informations d'accès au fichier transférées au second milieu de mémoire, et des informations de taille du fichier dans le premier milieu de mémoire (13) avant la migration.

9. Dispositif de mémorisation et de récupération de données selon l'une quelconque des revendications précédentes, selon lequel la zone de données du fichier dans le premier milieu de mémoire est ouverte après que le fichier d'informations a été produit.

10. Dispositif de mémorisation et de récupération de données selon l'une quelconque des revendications précédentes, dans lequel les moyens (S1-S11) d'ouverture de fichier produisent un descripteur de fichier (S10, S11) spécifiant un fichier transféré au second milieu de mémoire (20) sur la base d'une information d'accès.

11. Dispositif de mémorisation et de récupération de données selon la revendication 10, dans lequel les moyens de lecture (SR1-SR12) lisent le contenu d'un fichier ouvert par les moyens d'ouverture sur la base du descripteur de fichier et le mémorisent dans une zone prédéterminée de ladite mémoire (12) du processeur de données (10).

12. Dispositif de mémorisation et de récupération de données selon la revendication 11, comprenant en outre des moyens (SC1-SC6) de fermeture de fichier pour fermer un fichier ouvert par les moyens d'ouverture sur la base du descripteur de fichier après la fin de la lecture des données.

13. Procédé de mémorisation et de récupération de données selon lequel un processeur de données (10) incluant une mémoire (12), une unité centrale de traitement (11) et un premier milieu de mémoire (13), exécute une migration de fichier, qui transfère un fichier (14) mémorisé dans le premier milieu de mémoire (13) à un second milieu de mémoire (20) prévu à l'extérieur du processeur de données, puis produit un fichier d'informations incluant des informations d'accès des caractéristiques du fichier transféré, dans le premier milieu de mémoire, le procédé comprenant les étapes consistant à :
lire (S1, S2) lesdites informations d'accès à partir du fichier d'informations mémorisé dans le premier milieu de mémoire dans le cas de l'accès, par un programme d'application, au fichier transféré,
ouvrir (S3 à S11) le fichier transféré dans le second milieu de mémoire sur la base des informations d'accès lues, et
lire (SR1-SR12) les données provenant du fichier lu et charger ces données dans une zone de ladite mémoire (12), affectée par le programme d'application.

14. Procédé de mémorisation et de récupération de données selon la revendication 13, selon lequel le processeur de données (10) détermine une priorité de migration sur la base d'une norme prédéterminée pour une pluralité de fichiers mémorisés dans le premier milieu de mémoire et exécute la migration à partir du fichier possédant la priorité la plus élevée.

15. Procédé de mémorisation et de récupération de données selon la revendication 13 ou 14, selon lequel un fichier mémorisé dans le premier milieu de mémoire (13) possède une zone d'informations pour la mémorisation d'une information de gestion de fichier, et une zone de données pour la mémorisation de données, et la migration comprend le transfert des données de la zone de données vers le second milieu de mémoire (20) et la production d'un fichier d'informations dans le premier milieu de mémoire.

16. Procédé de mémorisation et de récupération de données selon la revendication 15, comprenant en outre l'étape consistant à ouvrir la zone de données du fichier dans le premier milieu de mémoire (13) après la production du fichier d'informations.

17. Procédé de mémorisation et de récupération de données selon la revendication 13, 14, 15 ou 16, selon lequel la migration forme un fichier contenant les données transférées et des informations d'accès aux données dans le second milieu de mémoire (20).
